**Europäisches Patentamt**

**European Patent Office**

**Office européen des brevets**

(19)

(11) Veröffentlichungsnummer: **0 068 172**
**B1**

# (12) EUROPÄISCHE PATENTSCHRIFT

(45) Veröffentlichungstag der Patentschrift:
**17.09.86**

(21) Anmeldenummer: **82104907.9**

(22) Anmeldetag: **04.06.82**

(51) Int. Cl.⁴: **C 08 L 71/04, C 08 L 51/06**

(54) **Thermoplastische Formmassen.**

(30) Priorität: **15.06.81 DE 3123716**

(43) Veröffentlichungstag der Anmeldung:
**05.01.83 Patentblatt 83/1**

(45) Bekanntmachung des Hinweises auf die Patenterteilung:
**17.09.86 Patentblatt 86/38**

(84) Benannte Vertragsstaaten:
**BE DE FR GB NL**

(56) Entgegenhaltungen:
**DE - A - 2 342 119**
**DE - A - 2 506 094**
**DE - A - 2 820 364**

(73) Patentinhaber: **BASF Aktiengesellschaft,
Carl-Bosch-Strasse 38, D-6700 Ludwigshafen (DE)**

(72) Erfinder: **Hambrecht, Juergen, Dr., Werderstrasse 30,
D-6900 Heidelberg (DE)**
Erfinder: **Brandstetter, Franz, Dr., Ritterbueschel 45,
D-6730 Neustadt (DE)**
Erfinder: **Echte, Adolf, Dr., Leuschnerstrasse 42,
D-6700 Ludwigshafen (DE)**
Erfinder: **Gerberding, Karl, Dr., In der Dreispitz 9,
D-6706 Wachenheim (DE)**
Erfinder: **Heckmann, Walter, Dr., Gelersbergstrasse 2,
D-6940 Weinheim (DE)**

## Beschreibung

Die Erfindung betrifft thermoplastische Formmassen auf der Grundlage von mit EPDM-Kautschuken schlagfest modifizierten Styrolpolymerisaten und Polyphenylenethern.

Thermoplastische Massen, die sich zur Herstellung von Formteilen eignen und die schlagzäh modifizierte Stryrolpolymerisate und Polyphenylenäther enthalten sind z.B. aus den US-PSen 3 383 435, 4 128 602 sowie 4 128 603 bekannt. Solche Formmassen eignen sich zur Herstellung von Formteilen, die sich im Vergleich zu schlagzäh modifizierten Styrolpolymerisaten, die nicht mit Polyphenylenäthern abgemischt sind, durch eine bessere Wärmeformbeständigkeit auszeichnen. Die Materialeigenschaften derartiger Formmassen sind im allgemeinen zufriedenstellend, doch hat es sich gezeigt, dass aus den Formmassen hergestellte Formteile mehr oder weniger witterungsanfällig sind.

In den US-PSen 3 943 191, 4 101 503, 4 101 504 sowie 4 101 505 wurden deshalb Mischungen aus Polyphenylenether und mit EPDM-Kautschuken schlagzäh modifizierten Styrolpolymerisaten beschrieben, deren Witterungsbeständigkeit verbessert ist. Es hat sich aber gezeigt, dass die mechanischen Eigenschaften dieser Produkte das Niveau der Polybutadien-modifizierten schlagfesten Polystyrole nicht ganz erreichen und ausserdem der Oberflächenglanz daraus hergestellter Formteile nicht befriedigt.

Aus der DE-A-2 820 364 sind thermoplastische Formmassen auf der Grundlage von mit EPDM-Kautschuken schlagfest modifizierten Styrolpolymerisaten und Polyphenylenethern bekannt, deren Kautschukteilchen einen mittleren Teilchendurchmesser (Zahlenmittel) von bis zu 2 Mikron haben. Aus derartigen Massen hergestellte Formteile zeigen noch keinen ausreichenden Oberflächenglanz.

Der vorliegenden Erfindung lag daher die Aufgabe zugrunde, thermoplastische Formmassen auf der Grundlage von mit EPDM-Kautschuken schlagfest modifizierten Styrolpolymerisaten und Polyphenylenethern zu schaffen, die zu Formteilen mit einem verbesserten Oberflächenbild und guten mechanischen Eigenschaften führen.

Diese Aufgabe wird erfindungsgemäss gelöst durch Formmassen, bei denen die Teilchen der Weichkomponente des mit EPDM-Kautschuken schlagfest modifizierten Styrolpolymerisates einen mittleren Teilchendurchmesser (Gewichtsmittel) von 0,35 bis 0,6 $\mu$m aufweisen.

Unter Formmassen sollen ungeformte Mischungen verstanden werden, die sich durch thermoplastische Verarbeitung innerhalb bestimmter Temperaturbereiche zu Formteilen oder zu Halbzeug verarbeiten lassen. Die Formmassen können als Granulat vorliegen, sie können aber auch pulverförmig oder durch Tablettierung vorgeformt oder in Form von Platten und Bahnen vorliegen.

Die Herstellung der in den Formmassen enthaltenen schlagfest modifizierten Styrolpolymerisate kann nach beliebigen Verfahren erfolgen, sofern dafür gesorgt ist, dass sich die erfindungsgemässe Teilchengrösse einstellt. Die Massnahmen hierfür sind bekannt. Sie sind beispielsweise in der Veröffentlichung von A. Echte in der Zeitschrift Angewandte Makromolekulare Chemie, Band 58/59 (1977) auf den Seiten 175 bis 198 beschrieben.

Die thermoplastischen Formmassen können schlagfest modifizierte Styrolpolymerisate und Polyphenylenether in beliebigen Mengen, beispielsweise in Mengen von 5 bis 90 Gew.-% Styrolpolymerisat und 95 bis 10 Gew.-% Polyphenylenether enthalten. Für die Herstellung von Formteilen eignen sich insbesondere solche Formmassen, die 20 bis 80 Gew.-% schlagfest modifizierte Styrolpolymerisate und 80 bis 20 Gew.-% Polyphenylenether enthalten.

Die meist angewandten Verfahren zur Herstellung schlagzäh modifizierter Styrolpolymerisate sind die Polymerisation in Masse oder Lösung, wie es beispielsweise in den Patentschriften: US-PS 2 694 692, FR-PS 1 561 586 beschrieben ist und Verfahren zur Masse-Suspensionspolymerisation, wie sie beispielsweise in den Patentschriften: US-PS 2 862 906, DT-OS 2 400 495, DT-OS 2 534 781 beschrieben sind. Selbstverständlich sind auch andere Verfahren anwendbar, sofern die obengenannte Teilchengrösse und Morphologie eingestellt wird.

Als monovinylaromatische Verbindungen kommen dabei insbesondere Styrol in Betracht, ferner die kern- oder seitenkettenalkylierten Styrole. Vorzugsweise wird jedoch Styrol allein verwendet.

Als Kautschuke für die Schlagfestmodifizierung der Styrolpolymerisate werden sogenannte EPDM-Kautschuke eingesetzt wie sie beispielsweise von Ritchie in der Veröffentlichung «Vinyl and Allied Polymer», Bd. 1, S. 121 (1968) beschrieben sind. Der Offenbarungsgehalt dieser Veröffentlichung wird durch diese Bezugnahme in vollem Umfange in die vorliegende Anmeldung aufgenommen. Unter EPDM-Kautschuken sind also Ethylen-Propylen-Terpolymerisate zu verstehen, die als Terkomponente Diene enthalten. Solche EPDM-Kautschuke können beispielsweise 30 bis 60 Gew.-% Ethylen, bis 65 Gew.-% Propylen und 1 bis 15 Gew.-% Dien einpolymerisiert enthalten, wobei sich die Gewichtsprozente zu 100 ergänzen. Die bevorzugten gummiartigen EPDM Interpolymeren sind solche, die aus Ethylen, Propylen und 5-Ethyliden-2-norbornen; aus Ethylen, Propylen und 1,4-Hexadien; und aus Ethylen, Propylen und Dicyclopentadien zusammengesetzt sind. Die EPDM-Kautschuke haben zweckmässig eine Mooney-Viskositätszahl ($M_L 1 + 4$ 100°), die im Bereich 35 bis 100 liegt.

Die Herstellung der schlagfest modifizierten Polymerisate mit dem erfindungsgemässen Eigenschaftsbild geschieht durch Polymerisation der monovinylaromatischen Verbindungen in Gegenwart des EPDM-Kautschuks. Die Polymerisation erfolgt, wie erwähnt, dabei in der Regel in an sich bekannter Weise in Masse, Lösung oder wässriger Dispersion, wobei zunächst der Kautschuk in den polymerisierbaren Monomeren gelöst und diese Ausgangslösung polymerisiert wird.

Bei der Lösungs-Polymerisation können dieser Ausgangslösung noch bis zu maximal 50 Gew.-%, bezogen auf die eingesetzten monovinylaromatischen Verbindungen, eines indifferenten Verdünnungsmittels zugesetzt werden. Als indifferente Verdünnungsmittel sind beispielsweise aromatische Kohlenwasserstoffe oder Gemische von aromatischen Kohlenwasserstoffen geeignet. Bevorzugt werden dabei Toluol, Ethylbenzol, die Xylole oder Gemische dieser Verbindungen.

Bei der Polymerisation in wässriger Dispersion wird im allgemeinen auf den Zusatz von Lösungsmitteln verzichtet; eine besonders günstige Ausführungsform besteht darin, die Lösung des Kautschuks in den Monomeren bis zu einem Umsatz von etwa 45% in Masse unter Einwirkung von Scherkräften, die für die Einstellung der erfindungsgemässen Teilchengrössen erforderlich sind, vorzupolymerisieren, diese Reaktionsmasse dann in Wasser zu suspendieren und anschliessend auszupolymerisieren. Im allgemeinen wird dieses Verfahren unter Zugabe öllöslicher, in Radikale zerfallender Initiatoren wie Benzoylperoxid, Dicumylperoxid, Di-tert.-butylperoxid, Azodiisobutyronitril u.ä. oder Kombinationen davon ausgelöst, doch kann die Vorpolymerisation auch thermisch gestartet werden. Als Suspendiermittel dienen bekanntlich wasserlösliche, hochmolekulare Verbindungen wie Methylcellulose, Oxypropylcellulose, Polyvinylalkohol, teilverseifte Polyvinylacetate usw. oder anorganische Dispergiermittel, z.B. Bariumsulfat. Die Suspendiermittel werden im allgemeinen in Mengen von 0,1 bis 5 Gew.-%, bezogen auf die organische Phase eingesetzt.

Bei der Polymerisation in Masse oder Lösung wird in der Regel in einem Temperaturbereich zwischen 50 und 250°C, vorzugsweise 100 bis 200°C, polymerisiert. Der Polymerisationsansatz muss dabei mindestens im ersten Abschnitt der Polymerisation, d.h. bis zu Umsätzen der monovinylaromatischen Verbindungen gleich oder kleiner 45 Gew.-% gut gerührt werden. All diese Polymerisationsverfahren sind hinreichend bekannt und in Einzelheiten in der Literatur beschrieben. Eine zusammenfassende Darstellung findet sich bei Amos, Polym. Engng. Sci., 14 (1974), 1, S. 1 bis 11, sowie in den US-Psen 2 694 692 und 2 862 906, auf die wegen weiterer Einzelheiten verwiesen werden soll.

Die Weichkomponente ist im allgemeinen heterogen aufgebaut; sie bildet sich in der Regel im Laufe des Herstellprozesses aus und wird in der Menge und im Zerteilungsgrad durch die Verfahrensbedingungen beeinflusst. Die zu polymerisierende Lösung des EPDM-Kautschuks in den monovinylaromatischen Monomeren trennt sich bekanntlich unmittelbar nach Einsetzen der Reaktion in zwei Phasen, von denen die eine, eine Lösung des Kautschuks im monomeren Vinylaromaten, zunächst die kohärente Phase bildet, während die zweite, eine Lösung des Polyvinylaromaten in seinem eigenen Monomeren, in ihr in Tröpfchen suspendiert bleibt. Mit steigendem Umsatz vermehrt sich die Menge der zweiten Phase auf Kosten der ersten und unter Verbrauch der Monomeren; dabei tritt ein Wechsel der Phasenkohärenz auf. Bei diesem bilden sich Tropfen von EPDM-Kautschuklösung in Polyvinylaromatlösung aus; diese Tropfen halten aber ihrerseits kleinere Tropfen der jetzt äusseren Phase eingeschlossen.

Neben diesem Vorgang läuft eine Pfropfreaktion ab, bei der chemische Verknüpfungen zwischen den EPDM-Kautschukmolekülen und den Polyvinylaromaten unter Bildung von Pfropf-Copolymeren aus beiden Bestandteilen gebildet werden. Dieser Vorgang ist bekannt und z.B. bei Fischer, Die angew. Makrom. Chem. 33 (1973), S. 35 bis 74, ausführlich dargestellt.

Sowohl der aufgepfropfte als auch der mechanisch eingeschlossene Anteil des Polyvinylaromaten in den Kautschukteilchen ist zur Weichkomponente zu rechnen.

Wenn die Masse ganz durchpolymerisiert ist, ist so eine in eine harte Matrix aus dem Polyvinylaromaten eingelagerte heterogene Weichkomponente entstanden, die aus gepfropften Kautschukteilchen mit Einschlüssen aus Matrix-Material (Polyvinylaromat) besteht. Je grösser die Menge des eingeschlossenen Matrix-Materials ist, um so grösser ist bei konstantem EPDM-Kautschukgehalt die Menge der Weichkomponente.

Diese richtet sich also nicht nur nach der Menge des eingesetzten EPDM-Kautschuks, sondern auch nach der Prozessführung, besonders vor und während der Phaseninversion. Die Einzelmassnahmen sind prozessspezifisch und dem Fachmann bekannt (s. z.B. Freeguard, Brit. Polym. J. 6 (1974) S. 203 bis 228; Wagner, Robeson, Rubber Chem. Techn. 43 (1970), 1129 ff).

Um zu schlagfesten thermoplastischen Formmassen mit den erfindungsgemässen Eigenschaftsmerkmalen zu gelangen, wird die Menge an EPDM-Kautschuk, die vor der Polymerisation in den Monomeren unter Herstellung der Ausgangslösung gelöst wird, in Abhängigkeit von dem Endumsatz bei der Polymerisation so gewählt, dass der Weichkomponentengehalt im resultierenden schlagfest modifizierten Polymerisat der monovinylaromatischen Verbindungen mindestens 15 Gew.-%, vorzugsweise 20 Gew.-% und mehr, bezogen auf das schlagfest modifizierte Polymerisat beträgt. Die Obergrenze des Weichkomponentengehaltes ist durch die Forderung, dass der Polyvinylaromat die kohärente Phase bilden muss, zu etwa 50 bis 60 Gew.-% gegeben. Für die erfindungsgemässen thermoplastischen Formmassen hat sich dabei ein Weichkomponenten-Gehalt von 25 bis 35 Gew.-%, bezogen auf das schlagfest modifizierte Polymerisat, als besonders günstig erwiesen. Der EPDM-Kautschuk-Anteil des schlagfest modifizierten Polymerisats beträgt dann im allgemeinen zwischen 4 und 25 Gew.-%, vorzugsweise von 5 bis 20 Gew.-%.

Wie dargelegt und hinreichend bekannt, bestehen die schlagfest modifizierten Polymerisate der monovinylaromatischen Verbindungen aus einer einheitlichen umhüllenden Phase (Matrix) aus dem Polymerisat der monovinylaromatischen Verbindung, in die als disperse Phase die EPDM-Kautschuk-Teilchen der Weichkomponente eingebettet sind, wobei die Kautschuk-Teilchen partiell vernetzt und in mehr oder weniger starkem Masse während der Polymerisation durch die monovinylaromatischen Verbindungen gepfropft worden sind.

Die Bestimmung der mittleren Teilchengrösse der dispersen Weichkomponente kann z.B. durch Auszählung und Auswertung elektronenmikroskopischer Dünnschichtaufnahmen der schlagfest modifizierten Polymerisate erfolgen (vergl. F. Lenz, Zeitschrift für Wiss. Mikroskopie, 63 (1956), S. 50/56). Die Einstellung der Teilchengrösse der dispersen Weichkomponenten-Phase erfolgt dabei in an sich bekannter Weise bei der Polymerisation der monovinylaromatischen Verbindungen durch Anpassen der Rührgeschwindigkeit im ersten Abschnitt der Polymerisation, d.h. bis zu einem Umsatz der Monomeren von gleich oder kleiner als 45%. Dabei ist die Teilchengrösse der dispersen Weichkomponenten-Phase um so grösser, je kleiner die Rührerdrehzahl und damit je kleiner die Scherbeanspruchung ist. Der Zusammenhang zwischen der Rührgeschwindigkeit und der Grösse und Verteilung der Kautschukteilchen im resultierenden schlagfesten Polymerisat ist z.B. in der zitierten Arbeit von Freeguard beschrieben, auf welche hinsichtlich weiterer Einzelheiten verwiesen wird. Die betreffende notwendige Rührgeschwindigkeit zur Erzielung der gewünschten Teilchengrösse der dispersen Weichkomponenten-Phase hängt unter anderem von den jeweiligen Apparateverhältnissen ab und ist dem Fachmann bekannt bzw. lässt sich durch ein paar einfache Versuche bestimmen.

Die mittlere Teilchengrösse (Gewichtsmittel) der dispersen Weichkomponenten-Phase wurde bestimmt durch Auszählen und Mitteln der zur gleichen Grössenklasse (konst. Intervallbreite) gehörigen Teilchen aus elektronenmikroskopischen Dünnschichtaufnahmen. Mit den Volumina der Teilchen (3. Protenz des scheinbaren Durchmessers) innerhalb der Intervalle wird die Verteilungssummenkurve bestimmt. Beim 50%-Ordinatenwert kann auf der Abszisse der Äquivalentdurchmesser dann abgegriffen werden. Die angegebenen mittleren Durchmesser stellen dabei einen Mittelwert von mindestens 5000 Teilchen dar. Die mittlere Teilchengrösse soll im Bereich von 0,35 bis 0,6 liegen.

Bei den Polyethern handelt es sich um Verbindungen auf der Basis von in ortho-Position disubstituierten Polyphenylenoxiden, wobei der Ethersauerstoff der einen Einheit an den Benzolkern der benachbarten Einheit gebunden ist. Dabei sollen mindestens 50 Einheiten miteinander verknüpft sein. Die Polyether können in ortho-Stellung zum Sauerstoff, Wasserstoff, Halogen, Kohlenwasserstoffe, die kein -ständiges tert. Wasserstoffatom besitzen, Halogenkohlenwasserstoffe, Phenylreste und Kohlenwasserstoff-oxi-Reste tragen. So kommen in Frage:
Poly(2,6-dichlor-1,4-phenylen)-ether,
Poly(2,6-diphenyl-1,4-phenylen)ether,
Poly(2,6-dimethoxy-1,4-phenylen)ether,
Poly(2,6-dimethyl-1,4-phenylen)ether,
Poly(2,6-dibrom-1,4-phenylen)ether,
bevorzugterweise wird der Poly(2,6-dimethyl-1,4-phenylen)-ether eingesetzt. Besonders bevorzugt werden Poly(2,6-dimethyl)-1,4-phenylen)ether mit einer Grenzviskosität zwischen 0,45 und 0,65 dl/g (gemessen in Chloroform bei 30°C).

Die Mischungen aus den mit EPDM-Kautschuken schlagzäh modifizierten Styrolpolymerisaten und Polyphenylenethern können ausserdem weitere Zusatzstoffe wie Pigmente, Farbstoffe, Füllstoffe, Flammschutzmittel, weitere verträgliche Polymere, Antistatika, Antioxidantien und Schmiermittel enthalten.

Man stellt die erfindungsgemässen thermoplastischen Formmassen wie üblich auf Vorrichtungen, die ein homogenes Mischen zulassen, wie Knetern, Extrudern oder Walzenmischgeräten her. Neben einer ausgezeichneten Zähigkeit und einem guten Oberflächenbild zeichnen sich Formteile aus den erfindungsgemässen Formmassen vor allem durch einen guten Oberflächenglanz aus.

Beispiele und Vergleichsversuche
Beispiele
Ein schlagfestes Polystyrol auf Basis eines EPDM-Kautschuks wurde nach folgender Rezeptur hergestellt:

1) und 2)    In einem 5-l-Rührkessel mit Ankerrührer wurde eine Lösung
bestehend aus
1620 g Styrol
144 g EPDM-Kautschuk mit folgenden Kenndaten
Propylen-Anteil 46 Gew.-%
Dienkomponente: Ethylidennorbornen 7%
Dicyclopentadien 2%
Mooney-Viskosität ($M_L$1+4  100°C) : 50
36 g Di-tert.-butylperoxid

bei 120°C Innentemperatur und einer Rührerdrehzahl von 600 UPM bis zu einem Feststoffgehalt von 32,5 Gew.-% vorpolymerisiert.

Anschliessend wurden 1800 g Wasser, das 9,0 g Polyvinylpyrrolidon von K-Wert 90 und 1,8 g $Na_4P_2O_7$ enthielt, zugesetzt und die Rührerdrehzahl auf 400 UPM zurückgenommen. Durch Nachpolymerisation von 3 Stunden bei 130°C und 7 Stunden bei 250°C wurde bis zu einem Styrolumsatz von 99 Gew.-% auspolymerisiert.

Die mittlere Teilchengrösse der Weichkomponente mit Zellenteilchenmorphologie lag bei 0,4 µm und hatte folgende Grössenverteilung

<0,1 µm: 2%
0,1–0,3 µm: 10%
0,3–0,5 µm: 68%
0,5–0,7 µm: 17%
>0,7 µm: 3%

Es werden jeweils 75 Gew.-% Polyphenylenether (Beispiel 1) bzw. 55 Gew.-% schlagzähes Polystyrol mit 45 Gew.-% Polyphenylenether (Beispiel 2) gemischt. Die Ergebnisse sind in der Tabelle angegeben.

Vergleichsversuche

A) und B) Gemäss Beispiel 1 der DT-OS 2 824 389 wurde ein schlagfestes Polystyrol mit einem Kautschukgehalt von 8 Gew.-% und einer mittleren Teilchengrösse von 1,2 Mikron und einer Grössenteilung von

<0,5 µm: 5%
0,5–1,0 µm: 39%
1,0–1,5 µm: 31%
1,5–2,0 µm: 15%
>2,0 µm: 10%

hergestellt.

Es werden jeweils 75 Gew.-% des schlagzähen Polystyrols mit 25 Gew.-% Polyphenylenether (Beispiel A) bzw. 55 Gew.-% schlagzähes Polystyrol mit 45 Gew.-% Polyphenylenether (Beispiel B) gemischt.

C) Entsprechend der zuvor beschriebenen Herstellung der erfindungsgemässen EPDM modifizierten schlagfesten Polystyrole mit einer mittleren Teilchengrösse von 0,4 µm wurde ein Versuch durchgeführt bei dem während der Vorpolymerisation bei 150 UPM gerührt wurde. Dies ergibt ein Polymerisat mit einer mittleren Teilchengrösse von 3,5 µm und einer Grössenverteilung der Kautschukteilchen von

<1,0 µm: 1
1,0–2,0 µm: 8

2,0–3,0 µm: 20
3,0–4,0 µm: 43
4,0–5,0 µm: 19
5,0–6,0 µm: 7
>6,9 µm: 2

Es wurden 75 Gew.-% des so erhaltenen schlagzähen Polystyrols mit 25 Gew.-% Polyphenylenether gemischt.

Beispiele 1 und 2; Vergleichsversuche A bis C Auf einem Zweiwellenextruder werden die angegebenen Gewichtsteile schlagfestes Polystyrol, mit den angegebenen Gewichtsteilen Poly(2,6-dimethyl-1,4-phenylen)ether mit [η] = 0,61 [$^{dl}$/g] (gemessen in Chloroform bei 30 °C), sowie 2,0 Gewichtsteile eines Polyethylenwachses mit einer Schmelzviskosität von 1350 Centistoke und 1,6 Gewichtsteile Tris(nonylphenyl)phosphit bei 300 °C aufgeschmolzen, homogenisiert und anschliessend granuliert.

Mit Hilfe der obigen Konzentrate und schlagfestem Polystyrol werden auf einem Zweiwellenextruder bei 270 °C unter Zusatz von Polyethylen und Tris(nonylphenyl)phosphit Endmischungen hergestellt, die bezogen auf 100 Gewichtsteile Endmischung, die in der Tabelle angegebenen Gewichtsteile Poly(2,6-dimethyl-1,4-phenylen)ether, 1,5 Gewichtsteile Polyethylen und 0,8 Gewichtsteile Tris(nonylphenyl)phosphit enthalten.

Aus den Mischungen wurden mittels einer Spritzgussmaschine bei 280 °C Prüfkörper hergestellt. An diesen Prüfkörpern mit den Abmessungen 50 × 40 × 2 mm wurde der Glanz durch Reflexionsmessung mit einem Lange-Fotometer bestimmt. Die Einfalls- und Reflexionswinkel betrugen jeweils 60 °C. Als Standard diente weisses Vliespapier (= 0%) und ein Schwarzglasspiegel (= 100%).

Die Kerbschlagzähigkeit (kJ/m²) wurde nach DIN 53 453 an bei 280 °C spritzgegossenen Normkleinstäben gemessen.

Der Vicat-Erweichungspunkt in °C wurde nach DIN 53 460, Verfahren B, in Silikonöl bestimmt.

Tabelle

| Beispiele | Schlagfestes Polystyrol [Gew.-%] | mittlere Teilchengrösse [µm] | Poly-(2,6-dimethyl-1,4-phenyl)ether [Gew.-%] | Kerbschlagzähigkeit [KJ/m²] | Glanz [%] | Vicat [°C] |
|---|---|---|---|---|---|---|
| 1 | 75 | 0,5 | 25 | 11,4 | 87 | 111 |
| 2 | 55 | 0,5 | 45 | 8,9 | 64 | 129 |
| Vergleichsversuche (nicht erfindungsgemäss) | | | | | | |
| A | 75 | 1,2 | 25 | 8,4 | 33 | 108 |
| B | 55 | 1,2 | 45 | 5,7 | 30 | 126 |
| C | 75 | 3,5 | 25 | 8,1 | 25 | 107 |

**Patentanspruch**

Thermoplastische Formmassen auf der Grundlage von mit EPDM-Kautschuken schlagfest modifizierten Styrolpolymerisaten und Polyphenylenethern, dadurch gekennzeichnet, dass die Teilchen der Weichkomponente des schlagfest modifizierten Styrolpolymerisates einen mittleren Teilchendurchmesser (Gewichtsmittel) von 0,35 bis 0,6 Mikron aufweisen.

## Claim

Thermoplastic molding compositions based on styrene polymers and polyphenylene ethers modified to be impact resistant with EPDM rubber, wherein the particles of the elastomeric component of the styrene polymer modified to be impact resistant have an average diameter (weight average) of from 0.35 to 0.6 microns.

## Revendication

Matières thermoplastiques à mouler à base de polymères de styrène modifiés dans le sens de la résistance au choc par des caoutchoucs EPDM et d'éthers de polyphénylène, caractérisées en ce que les particules du composant mou du polymère de styrène modifié dans le sens de la résistance au choc présentent un diamètre moyen de particules (moyenne pondérale) de 0,35 à 0,6 micron.